# EUROPÄISCHE PATENTSCHRIFT

(11) **EP 1 935 229 B1**
(45) Veröffentlichungstag und Bekanntmachung des Hinweises auf die Patenterteilung: **24.02.2010**
(21) Anmeldenummer: 07023403.4
(22) Anmeldetag: 04.12.2007
(51) Int. Cl.: A01D 78/10, A01D 80/00

(54) **Heuwerbungsmaschine**
Hay-making machine
Machine de fenaison

(30) Priorität: 20.12.2006 DE 102006061227
(43) Veröffentlichungstag der Anmeldung: 25.06.2008
(73) Patentinhaber: CLAAS Saulgau GmbH, 88348 Bad Saulgau (DE)
(72) Erfinder: Prenzler, Jürgen, 88379 Unterwaldhausen (DE)

(56) Entgegenhaltungen:
- EP-A- 1 384 398
- EP-A- 1 433 372
- CH-A5- 695 328
- GB-A- 1 039 029

## Beschreibung

Die Erfindung betrifft eine Heuwerbungsmaschine insbesondere zum Erzeugen von Schwade gemäß dem Oberbegriff des unabhängigen Anspruchs 1.

### Stand der Technik

Rechkreisel von Kreiselschwadern mit gesteuerten Zinkenarmen verfügen über mit Rechzinken bestückte Zinkenarme, die in bekannter Weise von Kurvenbahnen gesteuert werden und die von einem Fahrwerk bestehend aus Tast- und Stützrädern bodenkopierend am Boden abgestützt werden. Bekannt sind sogenannte Einkreiselschwader aber auch Mehrkreiselschwader, wobei letztere wiederum bekannt sind als Seiten- oder Mittelschwader. Mehrkreiselschwader dienen dazu die Arbeitsbreite zu vergrößern. Analog und in ähnlicher Weise gilt dieses auch für Kreiselheuer, die als Wender eingesetzt werden, und die teilweise auch für Rechzwecke durch entsprechende Umbaumanipulationen zur Bildung von Schwade genutzt werden können.

Weiterhin sind auch Heuwerbungsmaschinen in Verbindung mit Schwadversetzern als Förderbänder bekannt, die dazu dienen, Schwade nach außen an den Rand der Arbeitsbreite eines Kreiselschwaders zu versetzen. Dieses dient dazu Großschwaden zu bilden die auf einer Hin- und Rückfahrt zusammengelegt werden.

Damit das zusammengerechte am Boden liegende Ernte- Rechgut auf das Förderband eines derartigen Schwaders gelangen kann, ist dem Förderband eine Pick up vorgelagert, die das bereits zusammengerechte Erntegut vom Boden aufnimmt, anhebt und dadurch an das höhergelegene Förderband übergibt. Eine Pick up ist ein technisch aufwendiges und mit hohen Kosten einhergehendes Gerät und sie hat in diesem Anwendungsfall lediglich die Aufgabe, dass Erntegut vom Boden abzuheben um es aufwärts zur Überwindung eines Höhendifferenz zu fördern.

Kreiselschwader mit mehreren Rechkreiseln übergeben teilweise das zusammengerechte Erntegut von einen ersten an einem benachbarten zweiten oder sogar dritten oder weiteren Rechkreiseln, bevor es in einem Schwad abgelegt wird.

Antriebstechnisch bedeutet dieses, dass der Rechkreisel, dem das Rechgut des benachbarten Rechkreisels übergeben wird, nunmehr auch das Erntegut des vorhergehend benachbarten Rechkreisels mit bearbeiten muss, welches ihm eine höheres Drehmoment abverlangt, wodurch dessen Antriebselemente wie Kegelradgetriebe, Antriebswellen und dessen Arbeitsorgane entsprechend höher belastet werden. Bei stetig größer werden Arbeitsbreiten mit noch größeren Rechkreiseldurchmessern werden somit auch die Anforderungen an diese Bauteile im Sinne der Dauerfestigkeit größer und es müssen stärker dimensionierte Antriebe vorgesehen werden.

### Aufgabenstellung

Hier setzt die Aufgabe der Erfindung an mit dem Ziel, kostengünstige und wirtschaftlichere Lösungen für derartige Heuwerbungsmaschine mit großen Arbeitsbreiten vorzuschlagen, wobei gleichzeitig auch die Belastung derartiger Antriebe reduziert werden soll.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Es ist vorgesehen, ein neues Verfahren der Schwadbildung bei Heuwerbungsmaschinen dadurch zu erreichen, indem einem oder mehreren Rechkreiseln der Heuwerbungsmaschine ein separates translatorisch arbeitendes Fördermittel als Schwadleger zugeordnet ist. Dieses translatorisch arbeitendes Fördermittel kann beispielsweise als umlaufend angetriebenes Endlosförderband als Umschlingungstrieb oder beispielsweise auch als Förderschnecke in einem Fördertrog ausgebildet sein, wobei der jeweilige Rechkreisel dass zusammengerechte Erntegut aus der umlaufenden Rechbewegung der Rechzinken direkt an das Fördermittel übergibt.

Verfahrenstechnisch bedeutet dieses, dass dieses Fördermittel an der Schwadbildung und der Schwadablage direkt beteiligt ist. Dieses ist besonders dann von Vorteil, wenn die Querverschiebung des zusammengerechten Ernteguts zwecks Bildung eines Schwads größere Distanzen zu überwinden hat, die ansonsten nur dadurch überwunden würde, wenn ein Schwadkreisel sein Rechgut an seinem benachbarten Schwadkreisel zwecks Weitertransport übergibt. Dieses entlastet den Antrieb und die Rechwerkzeuge des oder der Schwadkreisel, die diese zusätzliche Recharbeit ansonsten leisten müssten.

Eine kostenaufwendige Pick up als Höhenförderer zur Übergabe des Ernteguts an ein Förderband kann damit entfallen.

Somit ist dem Rechkreisel durch das Fördermittel zugleich ein Querförderer zugeordnet, der zudem nur das Erntegut bewegt, welches der Rechbreite des jeweiligen Rechkreisels zugeordnet ist.

Dabei kann bei Mehrkreiselschwadern, bei den sich benachbarte Rechkreisel zusammengerechtes Erntegut übergeben, nunmehr bei jedem Rechkreisel die volle Arbeitsbreite genutzt werden, weil eine Überschneidung der Arbeitsbreiten zweier Rechkreisel, die dann erforderlich ist, wenn sich die Rechkreisel das Erntegut übergeben, nunmehr entfallen kann. Diese nunmehr nicht mehr erforderliche Überschneidung der Arbeitsbreiten der benachbarten Rechkreisel kann als Zugewinn zur Vergrößerung der Gesamtarbeitsbreite des Kreiselschwaders genutzt werden.

Als besonders Vorteilhaft kann dabei auch angesehen werden, dass dem ersten Rechkreisel benachbarte zweite Rechkreisel, welcher das zusammengerechte Erntegut des ersten Rechkreisels ansonsten übernehmen müsste, einer deutlich geringren Belastung ausgesetzt ist, welches sich günstig auf geminderten Verschleiß und damit auf eine größere Lebensdauer der Heuwerbungsmaschine und damit auf eine bessere Wirtschaftlichkeit auswirkt. Alternativ können auch bei gleicher konstruktiver Auslegung der Antriebselemente und der Arbeitswerkzeuge der Rechkreisel größere Kreiseldurchmesser verwirklicht werden, welches es ermöglicht ebenfalls größere Arbeitsbreiten der Heuwerbungsmaschine zu verwirklichen.

Die Erfindung soll anhand der nachfolgenden Beschreibung eines Ausführungsbeispiels exemplarisch näher erläutert werden.

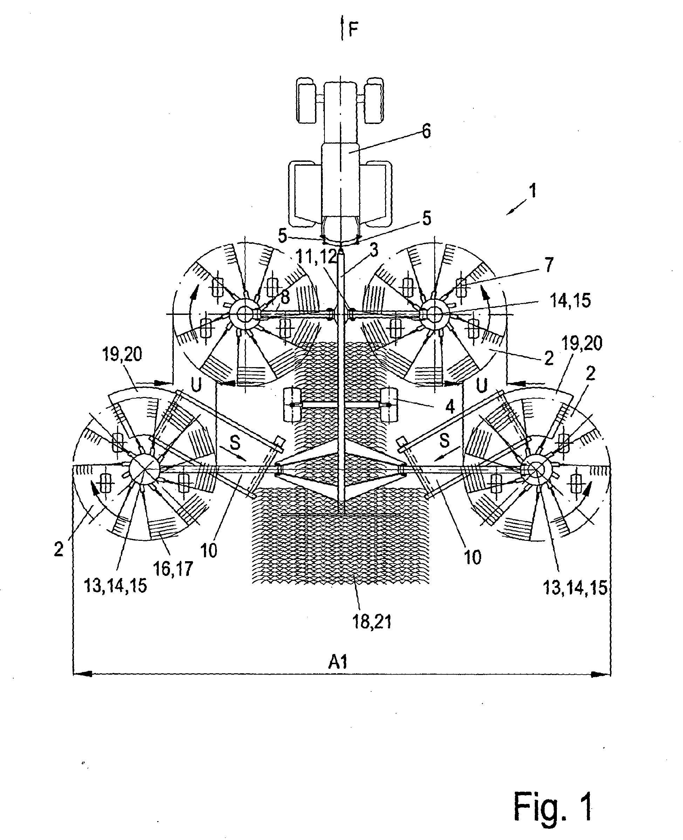

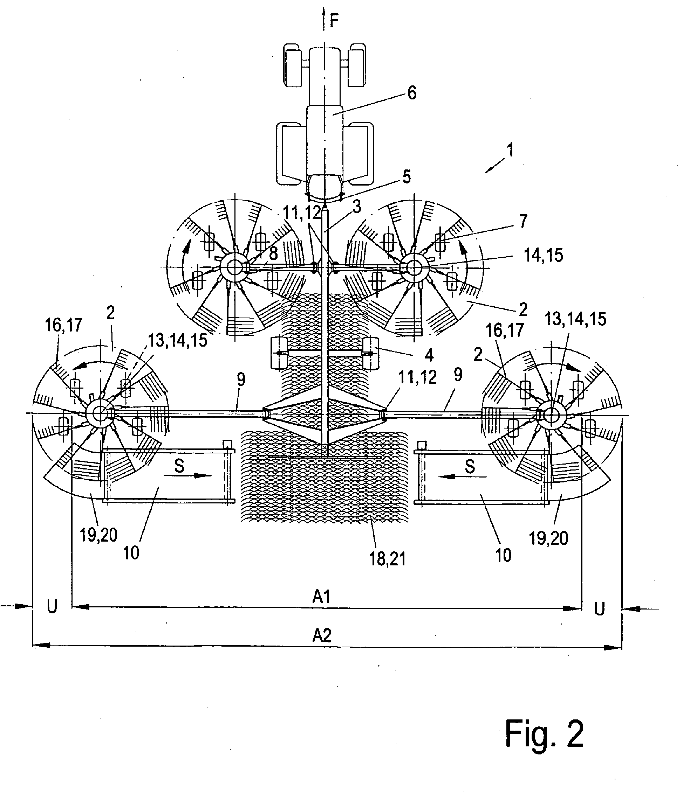

Fig.1 und Fig.2 zeigen zwei als Varianten ausgebildete Heuwerbungsmaschinen 1 als Ausführungsbeispiele der Erfindung am Beispiel von Vierkreiselschwadern in Arbeitsstellung mit mehreren Rechkreiseln 2, dargestellt in einer Draufsicht auf die Arbeitsebene

Die Heuwerbungsmaschinen 1 bestehen im Wesentlichen aus einem auf einem Fahrwerk 4 am Boden abgestützten Maschinengestell 3 aufnehmende an Auslegern 8,9 geführte Rechkreisel 2. Die Ausleger 8,9 sind an dem Maschinengestell 3 in Klappgelenken 11 mit etwa in Fahrtrichtung F verlaufenden Klappachsen 12 angelenkt.

Die angetriebenen Rechkreisel 2 drehen um aufrechte Kreiselachsen 14 und sie weisen im Inneren von Kreiselgehäusen 15 untergebrachte Kurvenbahn 13 und Rollenhebel auf, welche die Zinkenarme 16 aufnehmende Rechzinken 17 während ihrer Umlaufbewegung steuern. Dabei werden die Rechkreisel 2 am Boden durch Tast- und Stützräder 7 bodenkopierend abgestützt. Es handelt sich demzufolge im wesentlichen um einen dem Fachmann bekannten, am einem Traktor 6 anhängbaren Vierkreiselschwader, ausgeführt als Mittelschwader, so das sich die weiter ausführliche Beschreibung eines Kreiselschwaders damit erübrigt weil als bekannt vorausgesetzt.

Die in Bezug auf die Fahrtrichtung F hinteren Rechkreisel 2 weisen je ein Fördermittel 10 auf, ausgeführt als Umschlingungstrieb mit einem umlaufenden Endlosförderband. Der Antrieb erfolgt vorzugsweise hydrostatisch durch einen Hydraulikmotor in an sich bekannter Ausführung. Die Fördermittel (10) besitzen im Wesentlichen eine tangentiale Ausrichtung zur Kreiselachse 14 der Rechkreisel 2. Prinzipiell kann das Fördermittel 10 auch durch z.B. eine in einem Fördertrog fördernde Förderschnecke ersetzt werden.

Dabei ist das Fördermittel (10) so zur Kreiselachse 14 des Rechkreisels 2 positioniert, dass dieses teilweise die Flugbahn der umlaufenden Rechzinken 17 erzeugende Projektionsfläche auf dem Boden überdeckt. Dieses ist deshalb möglich, weil sich die durch die Kurvenbahn 13 gesteuerten Rechzinken 17 während ihres Umlaufs um die Kreiselachse 14 in einem vorgegebenen Bereich seiner Umlaufbahn vom Boden abheben und diese somit das Fördermittel 10 oberhalb des äußeren Kontur kollisionsfrei überstreichen können. Dabei wird die Aushubbewegung der Rechzinken 17 gleichzeitig genutzt, um einerseits das Ernte- bzw. Rechgut 18 auf eine als Bodenschleppe 19 ausgebildete Schürze 20 abzulegen wobei die Aushubbewegung der Rechzinken 17 dabei gleichzeitig die Förderbewegung des Rechguts 18 auf das schräg zum Boden angestellte Fördermittel 10 unterstützt, so dass das von den Rechzinken 17 bewegte Ernte- bzw. Rechgut 18 direkt von dem Fördermittel 10 aufgenommen und von diesem nunmehr translatorisch in Richtung S zwecks Bildung eines Schwads 21 weiter befördert und am anderen Ende des Fördermittel 10 abgeworfen werden kann..

In vorteilhafter Weise ist das Fördermittel (10) gegenüber der horizontalen Aufstandsebene so geneigt, dass es gegenüber dem Boden als Aufstandsebene der Tast- und Stützräder 7 des Rechkreisels 2 einen Neigungswinkel einnimmt. Die Neigung bzw. der Neigungswinkel ist dabei so gewählt, dass dieser in Richtung Abwurf zur Schwadbildung ansteigt, so dass die aufnehmende Seite des Fördermittels 10 der Bodenschleppe 19 zugewandt bodennah angeordnet ist. Die Bodenschleppe 19 ausgebildete Fangschürze 20 kann dabei auch bodenkopierend beweglich am Fördermittel 10 oder alternativ an der Stützkonstruktion des Schwadkreisels 2 angelenkt sein..

Somit wird die als Bodenschleppe 19 ausgeführte Fangschürze 20 sich auf dem Boden abstützend über diesen schleppend durch die Fahrbewegung F der Heuwerbungsmaschinen 1 hinweg bewegt.

Die Bodenschleppe 20 kann aus plattenförmigen Material wie Blech oder elastischem Material, beispielsweise Kunststoff oder aus mit Gewebe armiertem Gummi bestehen. Die äußere Form der Fangschürze 20 entspricht vorteilhafterweise einem Segmentbogen, dessen Radiusmittelpunkt mit der Kreiselachse 14 übereinstimmt. Diese Ausgestaltung ist jedoch variable und keineswegs an der Segmentform gebunden.

Vorteilhafter Weise kann das Fördermittel (10) mit einem gummierten Förderband mit Gewebeeinlage ausgebildet sein, welches zudem einzugsfördernde Elemente zur besseren Aufnahme des Rechguts aufweist. Diese können als elastische einzugsfördernde Elemente in Form von Noppen oder Fingern ausgebildet sein oder alternativ auch mit Federzinken bestückt sein.

Fig. 1 zeigt einen Vierkreiselschwader als Mittenschwader mit Überdeckungen U der außenliegenden Kreisel.

Fig.2 hingegen zeigt den gleichen Vierkreiselschwader gemäß Fig.1 jedoch ohne Überdeckungen U , wobei in Fig.1 die Fördermittel 10 in Fahrtrichtung F gesehen vor den Schwadkreiseln 2 liegen, wohingegen im Ausführungsbeispiel gemäß Fig.2 die Fördermittel 10 in Fahrtrichtung F gesehen hinter den Schwadkreiseln 2 liegen. In Fig1 sind die Drehrichtungen der Schwadkreisel eine Maschinenhälfte, gekennzeichnet durch Drehrichtungspfeile untereinander gleich, wohin gehend in Fig. 2 die Drehrichtungen der Schwadkreisel einer Maschinenhälfte, gekennzeichnet durch Drehrichtungspfeile, funktionsbedingt untereinander ungleich sind.

Ein Vergleich der Fig.1 mit der Fig.2 zeigt, dass in Fig.1 die maximal mögliche Arbeitsbreite A1 um den zweifachen Betrag der Überdeckung U geschmälert ist. Diese Überdeckung U ist dann erforderlich, wenn der äußere Rechkreisel das Rechgut an den benachbarten inneren Rechkreisel übergeben soll. Kann hingegen auf die Übergabe verzichtet werden, wie dieses beim Einsatz des erfindungsgemäßen Fördermittels 10 der Fall ist, so kann auf die Überdeckung U verzichtet werden so dass sich dadurch die Arbeitsbreite A1 um den Betrag der 2-fachen Überdeckung U auf die Gesamtarbeitsbreite A2 vergrößern läst.

Die Erfindung ist nicht ausschließlich auf Heuwerbungsmaschinen als Kreiselschwader mit gesteuerten Rechzinken beschränkt, sondern sie kann auch auf Kreiselwender mit integrierter Rechfunktion angewandt werden.

### Bezugszeichenliste

- 1: Heuwerbungsmaschine
- 2: Rechkreisel
- 3: Maschinengestell
- 4: Fahrwerk
- 5: Kupplungseinrichtung
- 6: Traktor
- 7: Tast- und Stützräder
- 8: Ausleger
- 9: Ausleger
- 10: Fördermittel
- 11: Klappgelenk
- 12: Klappachse
- 13: Kurvenbahn
- 14: Kreiselachse
- 15: Kreiselgehäuse
- 16: Zinkenarm
- 17: Rechzinken
- 18: Ernte- bzw. Rechgut
- 19: Bodenschleppe
- 20: Fangschürze
- 21: Schwad
- F: Fahrtrichtung
- S: Förderichtung
- A1: Arbeitsbreite
- A2: Arbeitsbreite
- U: Überdeckung

## Patentansprüche

1. Heuwerbungsmaschine mit wenigstens zwei um aufrechte Kreiselachsen umlaufend angetriebenen Rechkreiseln, die von einem Maschinengestell aufgenommen werden, wobei die Rechkreisel Kurvenbahn gesteuerte Zinkenarme und ein Fahrwerk mit bodenkopierenden Tast- und Stützräder aufweisen, **dadurch gekennzeichnet, dass** wenigstens einem Rechkreisel (2) zwecks Querverschiebung des Ernte- bzw. Rechguts (18) zur Vermeidung der Übergabe des Rechguts an seinen benachbarten Rechkreisel (2) ein translatorisch arbeitendes angetriebenes Erntegut (18) aufnehmendes Fördermittel (10) als Schwadleger zugeordnet ist.

2. Heuwerbungsmaschine nach Anspruch 1, **dadurch gekennzeichnet, dass** das Fördermittel (10) gegenüber dem Boden als Aufstandsebene der Tast- und Stützräder (7) des Rechkreisels (2) einen Neigungswinkel einnimmt.

3. Heuwerbungsmaschine nach Anspruch 2, **dadurch gekennzeichnet, dass** die Nelgung des Fördermittels (10) so ausgerichtet ist, das die aufnehmende Seite des Fördermittels (10) bodennäher angeordnet ist als das Abwurfende des Fördermittels (10).

4. Heuwerbungsmaschine nach Anspruch 1, **dadurch gekennzeichnet, dass** das Fördermittel (10) im Wesentlichen eine tangentiale Ausrichtung zur Kreiselachse (14) aufweist.

5. Heuwerbungsmaschine nach Anspruch 1, **dadurch gekennzeichnet, dass** das Fördermittel (10) als umlaufend angetriebenes Endlosförderband als Umschlingungstrieb ausgebildet ist.

6. Heuwerbungsmaschine nach Anspruch 1, **dadurch gekennzeichnet, dass** das Fördermittel (10) einzugsfördernde Elemente zur Aufnahme des Rechguts aufweist.

7. Heuwerbungsmaschine nach Anspruch 6, **dadurch gekennzeichnet, dass** das Förderband des Fördermittels (10) elastische einzugsfördernde Elemente als Mitnahmeelemente zur Förderung des Rechguts aufweist.

8. Heuwerbungsmaschine nach Anspruch 1, **dadurch gekennzeichnet, dass** das Fördermittel (10) zumindest teilweise die Flugbahn der umlaufenden Rechzinken (17) um die Kreiselachse (14) erzeugende Projektionsfläche auf dem Boden überdeckt.

9. Heuwerbungsmaschine nach Anspruch 1, **dadurch gekennzeichnet, dass** die aufnehmende Seite des Fördermittels (10) eine als Bodenschleppe (19) ausgebildete Fangschürze (20) aufweist.

10. Heuwerbungsmaschine nach Anspruch 9, **dadurch gekennzeichnet, dass** die Fangschürze (20) Ernte- bzw. Rechgut (18) aufnehmend sich auf dem Boden abstützend über diesen durch die Fahrbewegung (F) schleppend bodenkopierend hinweggeführt werden kann.

11. Heuwerbungsmaschine nach Anspruch 1, **dadurch gekennzeichnet, dass** das Fördermittel (10) als Förderschnecke ausgeblidet ist.

## Claims

1. A hay making machine comprising at least two rotary rakes which are driven in rotation about upright axes of rotation and which are accommodated by a machine frame, wherein the rotary rakes have cam track-controlled tine arms and a running gear having ground-following sensing and support wheels, **characterised in that** associated with at least one rotary rake (2) for the purposes of transverse displacement of the crop or rake material (18) to avoid transfer of the rake material to its adjacent rotary rake (2) is a translatorily operating driven conveyor means (10) for receiving crop material (18), as a windrower.

2. A hay making machine according to claim 1 **characterised in that** the conveyor means (10) assures an angle of inclination with respect to the ground as the support plane of the sensing and support wheels (7) of the rotary rake (2).

3. A hay making machine according to claim 2 **characterised in that** the inclination of the conveyor means (10) is so oriented that the receiving side of the conveyor means (10) is arranged nearer the ground than the discharge end of the conveyor means (10).

4. A hay making machine according to claim 1 **characterised in that** the conveyor means (10) is substantially in a tangential orientation relative to the rotary rake axis (14).

5. A hay making machine according to claim 1 **characterised in that** the conveyor means (10) is in the form of an endless conveyor belt driven in rotation as a wrap drive.

6. A hay making machine according to claim 1 **characterised in that** the conveyor means (10) has intake-conveying elements for receiving the rake material.

7. A hay making machine according to claim 6 **characterised in that** the conveyor belt of the conveyor means (10) has elastic intake-conveying elements as entrainment elements for conveying the rake material.

8. A hay making machine according to claim 1 **characterised in that** the conveyor means (10) at least partially covers over the projection surface produced by the path of the rotating rake tines (17) about the rotary rake axis (14) on the ground.

9. A hay making machine according to claim 1 **characterised in that** the receiving side of the conveyor means (10) has a catch apron in the form of a ground drag means (19).

10. A hay making machine according to claim 9 **characterised in that** the catch apron (20) picking up crop or rake material (18) in supporting relationship on the ground can be passed over same in ground-following fashion in dragging relationship by the travel movement (F).

11. A hay making machine according to claim 1 **characterised in that** the conveyor means (10) is in the form of a conveyor screw.

## Revendications

1. Machine de fenaison, comprenant au moins deux râteaux rotatifs qui sont entraînés en rotation autour d'axes de rotor verticaux et sont portés par un châssis de machine, les râteaux rotatifs présentant des bras à dents commandés par cames et un train de roulement doté de roues tâteurs et d'appui qui suivent le relief du sol, **caractérisée par le fait qu'**un dispositif de transport (10) entraîné, travaillant de manière translatoire et prenant en charge la récolte (18), est associé en tant qu'andaineur à au moins un râteau rotatif (2), en vue du déplacement transversal des produits récoltés ou ratissés (18), afin d'éviter le transfert des produits ratissés à un râteau rotatif (2) voisin.

2. Machine de fenaison selon la revendication 1, **caractérisée par le fait que** le dispositif de transport (10) adopte un angle d'inclinaison par rapport au sol en tant que plan de contact des roues tâteurs et d'appui (7) du râteau rotatif (2).

3. Machine de fenaison selon la revendication 2, **caractérisée par le fait que** l'inclinaison du dispositif de transport (10) est orientée de manière telle que le côté de réception du dispositif de transport (10) soit plus proche du sol que l'extrémité de décharge du dispositif de transport (10).

4. Machine de fenaison selon la revendication 1, **caractérisée par le fait que** le dispositif de transport (10) présente essentiellement une orientation tangentielle par rapport à l'axe de rotor (14).

5. Machine de fenaison selon la revendication 1, **caractérisée par le fait que** le dispositif de transport (10) est réalisé sous forme de bande transporteuse sans fin, en tant que moyen d'entraînement par enroulement.

6. Machine de fenaison selon la revendication 1, **caractérisée par le fait que** le dispositif de transport (10) comporte des éléments favorisant l'alimentation, destinés à prendre en charge les produits ratissés.

7. Machine de fenaison selon la revendication 6, **caractérisée par le fait que** la bande transporteuse du dispositif de transport (10) comporte des éléments élastiques favorisant l'alimentation, en tant qu'éléments entraîneurs destinés à transporter les produits ratissés.

8. Machine de fenaison selon la revendication 1, **caractérisée par le fait que** le dispositif de transport (10) recouvre au moins en partie la surface de projection au sol qui est produite par la trajectoire des dents de ratissage (17) tournant autour de l'axe de rotor (14).

9. Machine de fenaison selon la revendication 1, **caractérisée par le fait que** le côté de réception du dispositif de transport (10) présente un tablier collecteur (20) réalisé sous forme de racle traînant au sol (19).

10. Machine de fenaison selon la revendication 9, **caractérisée par le fait que** le tablier (20) collecte des produits récoltés ou ratissés (18), en étant en appui au sol, et peut être guidé sur celui-ci en étant traîné par le déplacement (F) et en suivant le relief du sol.

11. Machine de fenaison selon la revendication 1, **caractérisée par le fait que** le dispositif de transport (10) est réalisé sous forme de vis transporteuse.
